# EUROPEAN PATENT SPECIFICATION

(11) **EP 2 254 924 B1**
(45) Date of publication and mention of the grant of the patent: **29.02.2012**
(21) Application number: 09721216.1
(22) Date of filing: 16.03.2009
(51) Int. Cl.: C08G 18/08, C08G 18/28, C08G 18/34, C08G 18/66, C08G 18/80, C09D 175/04

(54) **AQUEOUS COATING COMPOSITIONS AND PROCESS FOR THE PRODUCTION OF COATING LAYERS**
WÄSSRIGE BESCHICHTUNGSZUSAMMENSETZUNGEN UND VERFAHREN ZUR HERSTELLUNG VON BESCHICHTUNGSSCHICHTEN
COMPOSITIONS DE REVÊTEMENT AQUEUSES ET PROCÉDÉ DE PRODUCTION DE COUCHES DE REVÊTEMENT

(30) Priority: 17.03.2008 US 69787 P
(43) Date of publication of application: 01.12.2010
(73) Proprietor: E. I. du Pont de Nemours and Company, Wilmington, DE 19898 (US)
(72) Inventor: DAHM, Ralf, D-42929 Wermelskirchen (DE); DREGER, Katharina, D-40593 Düsseldorf (DE); FLOSBACH, Carmen, D-42287 Wuppertal (DE)
(74) Representative: DuPont Performance Coatings Biering/Blum/Kimpel
(86) International application number: PCT/US2009/037212
(87) International publication number: WO 2009/117330

(56) References cited:
- EP-A- 0 590 484
- WO-A-01/02457
- US-A1- 2007 004 856

## Description

The present invention relates to aqueous coating compositions comprising a water-dilutable binder with hydroxyl and monoalcohol-blocked isocyanate groups, and an aminoplast resin as a cross-linker.

Water-dilutable binders with functional groups which can add to isocyanate groups and with blocked isocyanate groups, for example, isocyanate groups blocked by blocking agents, such as oximes or pyrazoles, as well as aqueous coating compositions comprising binders of this type are known, for example, from US 6,624,276, US 7,049,367, US 2005/0075470, US 2007/0004856, und WO 02/24780. Coating layers applied from such aqueous coating compositions are thermally cured, for example, by baking. At the temperatures prevailing during thermal curing the reversibly-blocked isocyanate groups become unblocked, the blocking agent is released and, while cross-linking, the free isocyanate groups reformed in this way react with functional groups which are reactive to isocyanate groups, in particular hydroxyl groups. According to the type of blocking agent used, the storage stability of the aqueous coating compositions may be variably high or, at higher storage temperatures, low. Also, what is known as bake-yellowing of the thermal cured coating layers, a characteristic which affects, in particular, light color shades, occurrs to a varying extent depending on the blocking agent used. The curing temperature has an additional effect on the extent of bake-yellowing, wherein, generally, the higher the curing temperature, the more pronounced the bake-yellowing.

Aqueous bake-curable coatings, in particular primer surfacers, which contain a water-dilutable self-cross-linkable binder comprising hydroxyl groups and blocked isocyanate groups are known from EP 0548727 A2. The self-cross-linkable binders are produced by reacting a polyester having hydroxyl and acid groups with a substoichiometric amount of a partially blocked polyisocyanate. Alcohols, ketoximes, phenols, CH-acidic and NH-acidic compounds are all mentioned as examples of blocking agents.

It has now been found that aqueous coating compositions comprising a water-dilutable binder comprising hydroxyl groups and monoalcohol-blocked isocyanate groups, and an aminoplast resin as a cross-linker are distinguished by particular storage-stability and that coating layers applied therefrom can be thermally cured at comparatively low temperatures. The coating layers exhibit a remarkably low level of bake-yellowing after thermal curing. Thermal curing is successful at temperatures which do not allow the monoalcohol-blocked isocyanate groups to re-cleave and a satisfactory cross-linking of the coating layers is achieved. The coating layers are chip-resistant and the aqueous coating compositions are therefore suitable as what are known as primer surfacer coating compositions, in particular. Primer surfacer coating compositions are used in the automotive industry to produce an intermediate coating layer having an antichipping and leveling function and being topically positioned between an electrocoating primer and a final color and/or special-effect topcoat which is in the form of a one-layer topcoat or of a two-layer coat comprising base coat and clear coat.

The invention relates to aqueous coating compositions with a resin solids consisting of 60 to 80 wt.% of binder solids and 20 to 40 wt.% of cross-linker solids, the binder solids consisting of 20 to 100 wt.% of binder C and 0 to 80 wt.% of one or more further, in particular hydroxyl-functional, binders and the cross-linker solids consisting of 80 to 100 wt.% of one or more aminoplast resins and 0 to 20 wt.% of one or more further cross-linkers, the sum of the respective wt.% equalizing 100 wt.% and the binder C being produced by reacting a polyisocyanate A, partially blocked by one or more monoalcohols A2 and having a content of free isocyanate groups of 0.5 to 10 wt.%, preferably 1 to 5 wt.%, with a resin B comprising a hydroxyl number of 50 to 250 mg KOH/g, preferably 70 to 200 mg KOH/g and a carboxyl number of 10 to 50 mg KOH/g, preferably 15 to 40 mg KOH/g at a molar ratio of hydroxyl groups of B to free isocyanate groups of A of at least 2 : 1.

In the description and the claims a distinction is made between "solids", "resin solids", "binder solids" and "cross-linker solids" of the aqueous coating compositions of the present invention. The solids of the aqueous coating compositions comprise any non-volatile constituents including the resin solids and any further components making a solids contribution like, for example, pigments, fillers (extenders) and non-volatile additives. The resin solids itself consists of the binder solids (solids contributions of the binders) and of the cross-linker solids (solids contributions of the cross-linkers).

In the description and the claims the term "content of free isocyanate groups" is used. It is calculated as content of free NCO (molecular mass = 42) per 100 g and is expressed in wt.%. For example, the polyisocyanate A, partially blocked by one or more monoalcohols A2 has a content of free isocyanate groups of 0.5 to 10 wt.%, this means that 100 g of polyisocyanate A comprise 0.5 to 10 g of NCO.

The aqueous coating compositions according to the invention have a solids content, for example, in the range of 40 to 65 wt.%. In the case of aqueous primer surfacer coating compositions, the solids content is, for example, 45 to 65 wt.%. The resin solids content of the aqueous coating compositions of the present invention ranges, for example, from 20 to 65 wt.% and, in the case of aqueous primer surfacer coating compositions, from 20 to 45 wt.%, for example. The resin solids consists of 60 to 80 wt.% of binder solids and 20 to 40 wt.% of cross-linker solids, the sum of the wt.% equalling 100 wt.%.

The binder solids itself consists of 20 to 100 wt.% of binder C and 0 to 80 wt.% of one or more further, in particular, hydroxyl functional binders, the sum of the wt.% equalling 100 wt.%.

The binder C is produced by reacting a polyisocyanate A partially blocked by one or more monoalcohols A2 with a hydroxyl-functional and carboxyl-functional resin B, i.e., C results from adding B to A while using hydroxyl groups of B and the free isocyanate groups of A and forming urethane groups. Due to the hydroxyl excess provided by the ratio of at least two hydroxyl groups of B per free isocyanate group of A which prevails during the addition reaction, the binder C also possesses, in addition to the monoalcohol A2-blocked isocyanate groups, unreacted hydroxyl groups originating from the resin B. The binder C also possesses the carboxyl groups originating from the resin B which cause the binder C to be water-dilutable after they have been base-neutralized and converted into carboxylate groups.

Polyisocyanates A partially blocked by one or more monoalcohols A2 and with a content of free isocyanate groups of 0.5 to 10 wt.%, preferably 1 to 5 wt.%, are addition products prepared from one or more polyisocyanates A1 and a corresponding deficit of one or more monoalcohols A2, i.e., an amount of monoalcohol(s) A2 which is substoichiometric with regard to the amount of free isocyanate provided by polyisocyanate A1.

The polyisocyanates A1 comprise two or preferably more than two free isocyanate groups corresponding to a content of free isocyanate of, for example, from 10 to 50 wt.%.

Examples of suitable polyisocyanates A1 comprise aromatic diisocyanates, such as, phenylene, toluylene, xylylene, naphthylene or diphenylmethane diisocyanate. However, preferred as diisocyanates A1 are diisocyanates with NCO groups bonded to non-aromatic carbon, i.e., aliphatic, cycloaliphatic or araliphatic diisocyanates, such as, 1,6-hexane diisocyanate, dicyclohexylmethane diisocyanate, isophorone diisocyanate, trimethylhexane diisocyanate, cyclohexane diisocyanate, cyclohexanedimethylene diisocyanate and tetramethylenexylylene diisocyanate.

Examples of the preferred polyisocyanates A1 having more than two isocyanate groups comprise trisisocyanatononane and polyisocyanates derived from the diisocyanates, in particular, the aliphatic, cycloaliphatic or araliphatic diisocyanates stated in the preceding paragraph. Such examples comprise oligomers of the diisocyanates or isocyanurate, uretdione or biuret derivatives of the diisocyanates or isocyanate-functional adducts of the diisocyanates and compounds having at least three groups containing active hydrogen per molecule, in particular, polyols, polyamines and/or aminoalcohols, such as, for example, trimethylolpropane, glycerol, diethylene triamine and 1:1-adducts of dialkanolamines and cyclic carbonate.

The monoalcohol(s) A2 reacted in deficit with the polyisocyanates A1 are aliphatic or cycloaliphatic monoalcohols with, for example, up to 12 carbon atoms. Apart from the hydroxyl groups bonded to aliphatic or cycloaliphatic carbon, the aliphatic or cycloaliphatic monoalcohols A2 do not comprise substituents comprising heteroatoms. The monoalcohols A2 do also not comprise heterocyclic moieties. Methanol, ethanol, the isomeric propanols, the isomeric butanols, lauryl alcohol, cyclohexanol and isobornyl alcohol are examples of monoalcohols A2, just to name only a few

Knowing the starting polyisocyanate A1 to be partially blocked and the predetermined curing temperature for an aqueous coating composition of the present invention (the curing temperature specified for a particular application), the person skilled in the art will choose the monoalcohol(s) A2 in each individual case according to their suitability for permanently (irreversibly) blocking the isocyanate groups of A1. The term "curing temperature" means the object temperature and is not to be confused, for example, with the air temperature in a baking oven. The term "permanent blocking" as opposed to "reversible blocking" does not mean that the monoalcohols A2-blocked isocyanate groups of the partially blocked polyisocyanates A cannot, under any circumstances, re-cleave into the monoalcohol(s) A2 and free isocyanate groups or, more precisely, free polyisocyanate A1. The term is rather directed towards a person skilled in the art of paint and coatings and it is to be understood in the present context that no such re-cleaving or practically no such re-cleaving takes place during storage, application and thermal curing of the aqueous coating compositions of the present invention. All aliphatic or cycloaliphatic monoalcohols A2 are suitable as permanent blocking agents in the case of the preferred diisocyanates or polyisocyanates A1 having isocyanate groups bonded to non-aromatic carbon and a predetermined curing temperature below 180 °C.

The addition reaction of A1 and A2 which is carried out so as to produce A, may take place in substance or in an organic solvent (mixture) which is inert to isocyanate groups. Generally, the addition reaction is carried out in a temperature range of 60 to 140 °C. According to the selected molar ratio of hydroxyl groups of A2 to isocyanate groups of A1 and according to the way in which the reaction is carried out, polyisocyanate A' which is completely blocked by monoalcohol(s) A2 and formed as a by-product may be present in the formed partially blocked polyisocyanate A.

The monoalcohol A2-blocked isocyanate groups of the binder C are derived from the polyisocyanate A partially blocked with one more monoalcohols A2. The content of the monoalcohol A2-blocked isocyanate groups is, for example, 0.1 to 0.5 mol per 100 g of binder C.

The resin B which is reacted with the partially blocked polyisocyanate A during production of the binder C has a hydroxyl number of 50 to 250 mg KOH/g, preferably 70 to 200 mg KOH/g and a carboxyl number of 10 to 50 mg KOH/g, preferably 15 to 40 mg KOH/g. Resins conventionally used as binders for coating compositions, such as, for example, (meth)acrytic copolymer resins, polyester resins, polyurethane resins as well as resin hybrids of two or more of said resin types are examples of resins B.

In a preferred embodiment, the resin B is an esterification product made of a polyurethane resin B1 with a carboxyl number of 50 to 200 mg KOH/g and a polyester polyol B2 with a hydroxyl number of 70 to 300 mg KOH/g and a carboxyl number of, for example, 0 to 30 mg KOH/g.

Polyurethane resins B1 with a carboxyl number of 50 to 200 mg KOH/g can be produced, as is known to a person skilled in the art, by reacting polyisocyanates with hydroxycarboxlic acids and, optionally, polyols at a stoichiometric ratio of isocyanate groups and hydroxyl groups. Linear polyurethane resins B1 with terminal carboxyl groups are preferred; especially preferred are linear polyurethane resins B1 with terminal and lateral carboxyl groups. Polyurethane resins of this type can be produced by reacting diisocyanates with monohydroxycarboxylic acids and diols or with monohydroxycarboxylic acids and dihydroxycarboxylic acids and, optionally, diols. The addition reactions carried out so as to produce polyurethane resins B1 may take place in substance or in an organic solvent (mixture) which is inert to isocyanate groups. Generally, the addition reactions are carried out at a temperature ranging from 60 to 100 °C.

Examples of polyisocyanates which may be used to produce polyurethane resins B1 are the same as those which have been previously mentioned as examples of diisocyanates and polyisocyanates A1.

Examples of hydroxycarboxylic acids which may be used to produce polyurethane resins B1 include monohydroxycarboxylic acids, such as, glycolic acid (hydroxyacetic acid), malic acid, 12-hydroxystearic acid, 4-hydroxybenzoic acid, citric acid, or 1:1-adducts of monoepoxy compounds and dicarboxylic acids, for example, corresponding adducts of glycidyl ethers or glycidyl esters, such as, glycidyl versatate with dicarboxylic acids, and polyhydroxycarboxylic acids, such as, tartaric acid, dimethylolpropionic acid and dimethylolbutyric acid.

Examples of polyols which may be used to produce polyurethane resins B1 include diols, such as, ethylene glycol, the isomeric propane-and butanediols, 1,5-pentanediol, 1,6-hexanediol, 1,10-decanediol, 1,12-dodecanediol, neopentyl glycol, butylethylpropanediol, trimethylhexane diol, diethylene glycol, triethylene glycol, tripropylene glycol, the isomeric cyclohexanediols, the isomeric cyclohexanedimethanols, hydrogenated bisphenols, tricyclodecanedimethanol, dimer fatty alcohol, bisphenol A, and polyols with more than two hydroxyl groups, such as, glycerol, trimethylolpropane, trimethylolethane, pentaerythritol, dipentaerythritol, ditrimethylolpropane, sorbitol and mannitol.

Polyesterpolyols B2 with a hydroxyl number of 70 to 300 mg KOH/g and a carboxyl number of, for example, 0 to 30 mg KOH/g can be produced by polycondensating polyols with polycarboxylic acids or suitable polycarboxylic acid derivatives, such as, for example, corresponding esters or anhydrides. Hydroxycarboxylic acids, monoalcohols, monocarboxylic acids and/or epoxide compounds may, optionally, be included in the polyester synthesis. Polycondensation may be carried out by the conventional methods known to the skilled person, for example, in the presence of conventional esterification catalysts and at elevated temperatures of, for example, 180 to 250 °C, for example, in the melt. Optionally, entrainers, such as, for example, xylene, may also be used.

Examples of polyols which may be used to produce polyesterpolyols B2 are the same as those which have been previously mentioned as examples of polyols which may be used to produce polyurethane resins B1.

Examples of polycarboxylic acids which may be used to produce polyesterpolyols B2 include dicarboxylic acids, such as, phthalic acid, isophthalic acid, terephthalic acid, tetrahydrophthalic acid, hexahydrophthalic acid, 1,3- and 1,4-cyclohexane dicarboxylic acid, succinic acid, adipic acid, sebacic acid, azelaic acid, dodecanedioic acid, maleic acid, fumaric acid, dimer fatty acids, and polycarboxylic acids with more than two carboxyl groups, such as, trimellitic acid and pyromellitic acid.

The polyesterpolyols B2 may be linear, in which case they are polyesterdiols B2. However, branched polyesterpolyols B2 are preferred.

Resins B according to the preferred embodiment can be produced by esterifying a carboxyl-functional polyurethane resin B1 with a polyesterpolyol B2. A person skilled in the art knows how to carry out esterification reactions of this type; for example, these reactions may be performed under the conditions mentioned with regard to the production of polyesterpolyols B2.

The polyisocyanate A, partially blocked with one or more monoalcohols A2, is reacted with the hydroxyl- and carboxyl-functional resin B at a molar ratio of hydroxyl groups of B to free isocyanate groups of A of at least 2 : 1 to form the binder C. The addition reaction may take place in substance or in an organic solvent (mixture) which is inert to isocyanate groups. Generally, the addition reaction is carried out at a temperature ranging from 60 to 110 °C . The proportions of A : B may be selected in such a way that the molar ratio of hydroxyl groups of B to free isocyanate groups of A is up to 30 : 1, for example; however, generally it is no more than 10 1.

According to the selected molar ratio of hydroxyl groups of B to free isocyanate groups of A and the way in which the reaction is carried out, unreacted B-molecules may be present in the formed binder C as a result of the process. This may be thoroughly favored in some cases.

Once the addition reaction between A and B is finished, the formed binder C, optionally comprising unreacted resin B, may, after the addition of a neutralizing agent, be converted, by the addition of water, into an aqueous binder dispersion with a solids content of, for example, 35 to 55 wt.%. It is also possible to provide binder C, neutralized or non-neutralized, as a solution in water-dilutable organic solvent and to use binder C in such form to prepare aqueous coating compositions according to the invention.

As has already been mentioned, the binder solids of the aqueous coating compositions of the present invention may comprise up to 80 wt.% of one or more further binders, i.e. binders that are different from binder C. This concerns hydroxyl-functional binders in particular. It is expedient that the further binders are free from reversibly-blocked isocyanate groups. Examples of corresponding further binders comprise resins conventionally used as binders for coating compositions, such as, for example, (meth)acryjic copolymer resins, polyester resins, polyurethane resins as well as resin hybrids of two or more of said resin types. Should the binder solids comprise binder(s) different from binder C, it is preferred that, in addition to binder C, the same resin B which forms a structural element of the binder C concerned is contained as a further binder or as the single further binder.

The cross-linker solids of the aqueous coating compositions of the present invention consists of 80 to 100 wt.% of one or more aminoplast resins (amine-formaldehyde condensate resins) and 0 to 20 wt.% of one or more further cross-linkers, the sum of the wt.% equating 100 wt.%. In addition to the aminoplast resin(s), interesterification cross-linkers, such as trisalkoxycarbonylaminotriazines and, less preferred, cross-linkers with reversibly-blocked isocyanate groups are examples of possible cross-linkers. It is preferred that the cross-linker solids consists of one or more aminoplast resins and comprises no further cross-linkers.

The aminoplast resin(s) is/are conventional aminoplast resins known as cross-linkers for coating compositions such as, for example, benzoguanamine resins and, in particular, melamine resins.

The aqueous coating compositions according to the invention may comprise fillers and/or pigments. If the aqueous coating compositions according to the invention are aqueous primer surfacer coating compositions, conventional fillers and, optionally, color and/or special-effect pigments corresponding, for example, to a weight ratio of pigment plus filler/resin solids of 0.6 : 1 to 1.5: 1 are contained. Examples of fillers are silicon dioxide, barium sulphate, talcum and kaolin. Examples of inorganic or organic color pigments are titanium dioxide, iron oxide pigments, carbon back, azo pigments, phthalocyanine pigments, quinacridone pigments, pyrrolopyrrole pigments and perylene pigments. Examples of special-effect pigments are metal pigments, e.g. of aluminum, copper or other metals; interference pigments such as metal oxide-coated metal pigments, e.g. titanium dioxide-coated aluminum, coated micas such as titanium dioxide-coated mica, platelet-like iron oxide and platelet-like copper phthalocyanine pigments.

The aqueous coating compositions of the present invention comprise water in a proportion of, for example, 20 to 60 wt.%. If aqueous primer surfacer coating compositions are concerned, the water content is, for example, from 20 to 45 wt.%.

In addition to water, the aqueous coating compositions according to the invention may also comprise one or more organic solvents, for example, 1 to 15 wt.% of organic solvent(s). Examples are C1-C4 alcohols, 2-ethyl hexanol, benzyl alcohol, isodecanol, ethylene glycol, propylene glycol, diethylene glycol, butyl acetate, methyl ethyl ketone, methyl isobutyl ketone, methoxypropanol, butyl glycol, butoxypropanol, butyl diglycol, hexyl glycol, methoxybutanol, diethylene glycol dimethyl ether, dipropylene glycol dimethyl ether, methoxypropyl acetate, butyl glycol acetate, butyl diglycol acetate, ethyl glycol acetate, N-methylpyrrolidone and aliphatic, aromatic or terpene hydrocarbons.

In addition to one or more neutralizing agents, such as, in particular, amines and/or aminoalcohols, the aqueous coating compositions according to the invention may comprise conventional paint additives in a total quantity of, for example, 0.1 to 10 wt.%, based on the resin solids content of the coating compositions. Examples of such additives are wetting agents, adhesion-promoting substances, catalysts, levelling agents, anti-cratering agents and thickeners.

Coating layers applied from the aqueous coating compositions of the present invention are thermally cured at object temperatures which are not sufficient to cleave the monoalcohol(s) A2 from the blocked isocyanate groups of the binder C.

The present invention therefore also relates to a process for the production of a coating layer, comprising the following steps:
a) applying an aqueous coating composition of the present invention to a substrate, and
b) thermally curing the coating layer at an object temperature which is not sufficient to cleave the monoalcohol(s) A2 from the blocked isocyanate groups of the binder C. If the binder C contained in the coating composition comprises monoalcohol A2-blocked isocyanate groups bonded to non-aromatic carbon, the object temperature is generally below 180 °C, in particular, in the range of 130 to 170 °C.

As mentioned at the outset, the aqueous coating compositions of the present invention are particularly suitable as aqueous (waterborne) primer surfacers which can be used for automotive OEM (original equipment manufacture) coating, in particular. Aqueous primer surfacer coating compositions according to the invention are characterized not only by good storage stability and low curing temperatures. Primer surfacer layers applied therefrom and thermally cured exhibit a remarkably low level of bake-yellowing and fulfill the technological requirements of primer surfacers posed by motor vehicle manufacturers, in particular with regard to chip resistance.

In this respect, the invention also relates, in particular, to a process for the production of a primer surfacer coating layer, comprising the following steps:
a) applying an aqueous primer surface coating composition of the present invention to a substrate, in particular an automotive substrate, and
b) thermally curing the primer surfacer coating layer at an object temperature which is not sufficient to cleave the monoalcohol(s) A2 from the blocked isocyanate groups of the binder C. if the binder C contained in the primer surfacer coating composition comprises monoalcohol A2-blocked isocyanate groups bonded to non-aromatic carbon, the object temperature is generally below 180 °C, in particular, in the range of 130 to 170 °C.

The aqueous coating compositions or aqueous primer surfacer coating compositions of the present invention may be applied by conventional application methods, in particular, by spraying onto various substrates made of materials which are sufficiently stable at the object temperatures prevailing when the applied coating layers are thermally cured. The substrates may consist of one single material or a plurality of different materials which are combined together in the manner of a mixed construction. Generally, metal or plastics material substrates are concerned. These are generally pre-coated, i.e. plastics materials substrates may, for example, be provided with a plastics primer, metal substrates generally have an electrocoat primer, in particular a cathodic electrocoat primer. When using the aqueous coating compositions according to the invention as aqueous primer surfacers, they are applied so as to have a dry layer thickness of, for example, 15 to 50 µm, in particular on automotive substrates, such as car bodies or car body parts, in particular car bodies or car body parts provided with an electrocoating primer.

After application and an optional flash-off or predrying phase at object temperatures, of, for examples, up to 80 °C: the coating layers are thermally cured, in particular by baking. As already mentioned, object temperatures prevail during thermal curing which are not sufficient to cleave the monoalcohol(s) A2 from the isocyanate groups blocked thereby of the binder C.

Primer surfacer coating layers applied from the aqueous primer surfacers of the present invention and thermally cured may, in a conventional manner known to the person skilled in the art, be overcoated with a conventional color and/or special-effect top coat either in the form of a single-layer top coat or as a two-layer top coat made of a color and/or special-effect base coat and a protective, glossy clear coat.

### Examples

### Example 1 (preparation of a urethanized polyester):

a) 412.5g dicyclohexytmethane diisocyanate, 180g 12-hydroxystearic acid, 180g dimethylolpropinic acid and 600g ethyl ethyl ketone were introduced into a flask equipped with stirrer, thermometer and reflux condenser. The mixture was heated to 60°C and stirred for 30 minutes Thereafter the reaction mixture was heated to 70°C and stirred for further 30 minutes. Then the reaction mixture was heated to reflux white stirring, until the NCO content was <0.4 wit.%. After cooling the contents of the flask were diluted by addition of 127.5g methyl ethyl ketone.
b) 404g tripropylene glycol, 138g dimer fatty acid, 284g 1,6-hexanediol und 284g trimellitic acid anhydride were introduced into flask equipped with stirrer, thermometer, column and distillation bridge. The contents were condensed while water of condensation was distilled off. The condensation was stopped by cooling to 80°C, after the acid value of the reaction mixture had reached 15 mg KOH/g. At 80°C 404g of the product from a) were added and the reaction mixture was heated to 160°C while distilling off the methyl ethyl ketone. Esterification was carried out until an acid number of 27 mg KOH/g was achieved. After cooling to 130°C the contents of the flask were diluted by addition of 486g N-methylpyrrolidone.

### Example 2 (preparation of Aqueous binder dispersions):

a) 177.5g N-methylpyrrolidone, 420g trimeric 1,6-hexane diisocyanate and 277g trimeric isophorone diisocyanate were introduced into a flask equipped with stirrer, thermometer and reflux condenser. The mixture was heated to 100°C and 283.5g cyclohexanol were added while keeping the temperature at ≤170°G. After the addition of the cyclohexanol a temperature of 110°C was maintained until the theoretical NCO content was reached. Then the contents of the flask were cooled to 70°C and 942g of the product from 1b) were added and the mixture was again heated to 100°C. This temperature was kept until the NCO content was <0.2 wt %. Then 27g dimethylethanolamine were homogeneously mixed in and the contents of the flask were cooled to 75°C. Deionized water was added portionwise to produce a 40 wt % aqueous binder dispersion.
b) Example 2a) was repeated with the difference that 272.2 g dimethyfpyrazole were used instead of the 283.5g cyclohexanol.
c) Example 2a) was repeated with the difference that 246.6 g butanone oxime were used instead of the 283.5g cyclohexanol.
d) Example 1b) was repeated with the difference that after the acid number of 27 mg KOH/g had been achieved the contents of the flask were cooled to 95°C. Instead of the 486g N-methylpyrrolidone 32g dimethylethanolamine were added and well mixed in. Thereafter 1200g deionized water were added within 15 minutes while stirring. Then 64g of a 10 wt.% aqueous solution of dimethylethanolamine were added and well mixed in. Finally a 40 wt% solids content was adjusted by diluting the contents of the flask with deionized water.

### Example 3 (determination of bake loss):

Samples of about 2g of the aqueous binder dispersions of Examples 2a) - 2c) were weighed into metal lids and baked for 1 hour at various temperatures. The bake loss was gravimetrically determined and calculated as relative loss of solids in wt.%. Tackiness and color after baking were also evaluated.

Table 1 shows the results,

**Table 1**

| | Bake loss (relative loss of solids in wt.%, tackiness, color | | |
|---|---|---|---|
| | binder dispersion 2a) | binder dispersion 2b) | binder dispersion 2c) |
| baking temperature (°C) | | | |
| 125 | 0.2 wt.%; tacky | 0.1 wt.%; tacky | 0.2 wt. %; tacky |
| 150 | 1 wt.%: tacky | 4.6 wt.%; non-adhesive, yellow | 3.5 wt.%; non-adhesive, yellow |
| 175 | 2.4 wt.%: tacky, slightly yellow | 12 wt.%: non-adhesive, yellow | 9.2 wt.%; non-adhesive, yellow |
| 190 | 5.3 wt.%: non-adhesive, yellow | not tested | not tested |

### Example 4 (preparation and testing of coating compositions):

a) A blend was prepared by mixing together 16.9 pbw (parts by weight) of the aqueous dispersion from 2d), 6.6 pbw deionized water, 0.1 pbw dimethylethanolamine, 0.4 pbw SurfynolⓇ 104 (surfactant), 20.4 pbw titanium dioxide 10.3 pbw barium sulphate, 1.5 pbw talc and 0.6 pbw N-methylpyrrolidone. Thereafter the mixture was homogenized and dispersed in a beadmill.
b) The paste from a) was mixed with 26.1 pbw of the aqueous dispersion from 2d), 8.0 pbw GymelⓇ 303 (melamine formaldehyde resin). 0.7 pbw of NacureⓇ155 (catalyst), 1.5 pbw of a polysitoxane wetting agent and 6.9 pbw deionized water.
c) The paste from a) was mixed with 13.2 pbw of the aqueous dispersion from 2d), 12.9 pbw of the aqueous dispersion from 2a), 8.0 pbw CamelⓇ 303 (melamine formaldehyde resin), 0.7 pbw of NacuretⓇ155 (catalyst), 1.5 pbw of a polysiloxane wetting agent and 6.9 pbw deionized water.
d) The paste from a) was mixed with 13.2 pbw of the aqueous dispersion from 2d), 12.9 pbw of the aqueous dispersion from 2b), 8.0 pbw Cymele, 303 (melamine formaldehyde resin). 0.7 pbw of NacureⓇ155 (catalyst), 1.5 pbw of a polysiloxane wetting agent and 6.9 pbw deionized water.
e) The paste from a) was mixed with 13.2 pbw of the aqueous dispersion from 2d), 12.9 pbw of the aqueous dispersion from 2c), 8.0 pbw CymelⓇ 303 (melamine formaldehyde resin), 0.7 pbw of NacreⓇ155 (catalyse), 1.5 pbw of a polysiloxane wetting agent and 6.9 pbw deionized water.

A sample of each of the coating compositions 4b) - 4e) was stored for 3 days at 60°C in a closed glass mottle. Thereafter the samples were tested for changes.

Each of the coating compositions 4b) - 4e) was spray-applied at 30 µm dry film thickness on steel panels provided with an electrocoating primer. The coatings so applied were baked for 30 minutes at 150°C (object temperature) and their bake yellowing was determined using a colorimeter (X-Rite MA 68 sold by the firm X-Rite incorporated. Grandeville, Michigan, U.S.A.). The coatings were then overcoated with 20 µm white water-borne base coat and subsequently with 45 µm one-component solvent-borne clear coat (film thickness values refer to dry film thicknesses). Base coat and clear coat were applied wet-on-wet and jointly bake-cured for 30 minutes at 155°C (object temperature).

The multi-layer coatings so prepared were tested for bake yellowing and stone chip resistance at -20°C (carried out by means of stone chip test equipment according to VDA, Erichsen, model 508; test conditions: 2 x 500 g steel grit 4-5 mm sharp-edged, 2 bar). Evaluation of the damage (indicator 0 = no spalling, indicator 5 = complete detachment).

Table 2 shows the results.

**Table 2**

| | condition after storage for 3 days at 60°C | bake yellowing (Δb*) | bake yellowing of multi-layer coating (with white base coat and clear coat; Δb*) | stone chip resistance (indicator) |
|---|---|---|---|---|
| coating composition: | | | | |
| 4b) (comparative) | unchanged | 0 | 0 | 3 |
| 4c) (According to the invention) | unchanged | 0 | 0 | 1.5 |
| 4d) (comparative) | gelled | 0.1 | 0.4 | 1.5 |
| 4e) (comparative) | gelled | 1.3 | 3.2 | 1.5 |

| | | | | |
|---|---|---|---|---|
| b*: yellow-blue value b* according to the CIELab system, see DIN 6174 | | | | |

## Claims

1. Aqueous coating compositions with a resin solids consisting of 60 to 80 wt.% of binder solids and 20 to 40 wt.% of cross-linker solids, the binder solids consisting of 20 to 100 wt.% of binder C and 0 to 80 wit.% of one or more further binders and the cross-linker solids consisting of 80 to 100 wt.% of one or more aminoplast resins and 0 to 20 wt.% of one or more further cross-lirlkers, the sum of the respective wt.% equalling 100 wit.% and the binder C being produced by reacting a polyisocyanate A partially blocked by one or more monoalcohols A2 and having a content of free isocyanate groups of 0.5 to 10 wt.% with a resin B comprising a hydroxyle number of 50 to 250 mg KOH/g and a carboxyl number of 10 to 50 mg KOH/g at a molar ratio of hydroxyle groups of B to free isocyanates groups of A of at least 2:1.

2. The aqueous coating compositions of clam 1, wherein the polyisocyanate A is an addition product prepared from one or more polyisocyanates A1 and a deficit of one or more monoalcohols A2, wherein the one or more polyisocyanates A1 are selected from the group consisting of diisocyanates with NCO groups bonded to non-aromatic carbon, trisisocyanatononane, polyisocyanates derived from the diisocyanates with NCO groups bonded to non-aromatic carbon and any combinations thereof.

3. The aqueous coating compositions of claim 1 or 2, wherein the content of the monoalcohols A2-blocked isocyanate groups is 0.1 to 0.5 mol per 100 g of binder C.

4. The aqueous coating compositions of claim 1, 2 or 3, wherein resin B is an esterification product made of a polyurethane resin B1 with a carboxyl number of 50 to 200 mg KOH/g and a polyester polyol 82 with a hydroxyl number of 70 to 300 mg KOH/g and a carboxyl number of 0 to 30 mg KOH/g.

5. The aqueous coating compositions of any one of the preceding claims, wherein the further binders are hydroxyl-functional.

6. The aqueous coating compositions of any one of the preceding claims, wherein the same resin B which forms a structural element of the binder C is contained as a further binder or as the single further binder,

7. The aqueous coating compositions of any one of the preceding claims, wherein the cross-linker solids consists of one or more aminoplast resins.

8. The aqueous coating compositions of claim 7, wherein the one or more aminoplast resins are aminoplast resins.

9. A process for the production of a coating layer, comprising the folloeving steps:
a) applying an aqueous coating composition of any one of the preceding claim to a substrate, and
b) thermally curing the coating layer at an object temperature which is not sufficient to cleave the monoalcohol(s) A2 from the blocked isocyanate groups of the binder C.

10. The process of claim 9, wherein the aqueous coating composition is applied and thermally cured to form a primer surfacer coating layer on an automotive substrate.

## Patentansprüche

1. Wässrige Beschichtungszusammensetzungen mit Harzfeststoffen bestehend aus 60 bis 80 Gew.-% Bindemittelfeststoffen und 20 bis 40 Gew.-% Vernetzungsmittelfeststoffen, wobei die Bindemittelfeststoffe aus 20 bis 100 Gew.-% Bindemittel C und 0 bis 80 Gew.-% eines oder mehrerer weiterer Bindemittel bestehen und die Vernetzungsmittelfeststoffe aus 80 bis 100 Gew.-% eines oder mehrerer Aminoplastharze und 0 bis 20 Gew.-% eines oder mehrerer weiterer Vernetzungsmittel bestehen, wobei die Summe der jeweiligen Gew.-% 100 Gew.-% entspricht und das Bindemittel C durch Reagieren eines Polyisocyanats A, das teilweise durch ein oder mehrere Monoalkohole A2 blockiert ist und einen Gehalt an freien Isocyanatgruppen von 0,5 bis 10 Gew.-% aufweist, mit einem Harz B, das eine Hydroxylzahl von 50 bis 250 mg KOH/g und eine Carboxylzahl von 10 bis 50 KOH/g bei einem Molverhältnis von Hydroxylgruppen von B zu freien Isocyanatgruppen von A von mindestens 2:1 umfasst, hergestellt wird.

2. Wässrige Beschichtungszusammensetzungen nach Anspruch 1, wobei das Polyisocyanat A ein Additionsprodukt ist, das aus einem oder mehreren Polyisocyanaten A1 und mit Fehlen eines oder mehrerer Monoalkohole A2 hergestellt wird, wobei das eine oder die mehreren Polyisocyanate A1 aus der Gruppe ausgewählt werden bestehend aus Diisocyanaten, bei denen NCO-Gruppen an nichtaromatischen Kohlenstoff gebunden sind, Trisisocyanatnonan, Polycyanaten, die von den Diisocyanaten abgeleitet sind, bei denen NCO-Gruppen an nichtaromatischen Kohlenstoff gebunden sind, und irgendwelchen Kombinationen davon.

3. Wässrige Beschichtungszusammensetzungen nach Anspruch 1 oder 2, wobei der Gehalt der durch Monoalkohol A2 blockierten Isocyanatgruppen 0,1 bis 0,5 Mol pro 1200 g Bindemittel C beträgt.

4. Wässrige Beschichtungszusammensetzungen nach Anspruch 1, 2 oder 3, wobei das Harz B ein Veresterungsprodukt ist, das aus einem Polyurethanharz B1 mit einer Carboxylzahl von 50 bis 200 mg KOH/g und einem Polyesterpolyol B2 mit einer Hydroxylzahl von 70 bis 300 mg KOH/g und einer Carboxylzahl von 0 bis 30 mg KOH/g hergestellt wird.

5. Wässrige Beschichtungszusammensetzungen nach einem der vorhergehenden Ansprüche, wobei die weiteren Bindemittel hydroxylfunktionell sind.

6. Wässrige Beschichtungszusammensetzungen nach einem der vorhergehenden Ansprüche, wobei dasselbe Harz B, das ein strukturelles Element des Bindemittels C bildet, als weiteres Bindemittel oder als das einzige weitere Bindemittel enthalten ist.

7. Wässrige Beschichtungszusammensetzungen nach einem der vorhergehenden Ansprüche, wobei die Vemetzungsmittelfeststoffe aus einem oder mehreren Aminoplastharzen bestehen.

8. Wässrige Beschichtungszusammensetzungen nach Anspruch 7, wobei das eine oder die mehreren Aminoplastharze Aminoplastharze sind.

9. Verfahren fiir die Herstellung einer Beschichtungsschicht, umfassend die folgenden Schritte:
a) das Aufbringen einer wässrigen Beschichtungszusammensetzung nach einem der vorhergehenden Ansprüche auf ein Substrat und
b) das thermische Aushärten der Beschichtungsschicht bei einer Objekttemperatur, die nicht ausreicht, um den/die Monoalkohol(e) von den blockierten Isocyanatgruppen des Bindemittels C abzuspalten.

10. Verfahren nach Anspruch 9, wobei die wässrige Beschichtungszusammensetzung aufgebracht und thermisch ausgehärtet wird, um eine Grundierspachtelmassen-Beschichtungsschicht auf einem Fahrzeugsubstrat zu bilden.

## Revendications

1. Compositions de revêtement aqueuses avec une teneur en matières solides de type résine constituées de 60 à 80 % en pds de matières solides de type liant et de 20 à 40 % en pds de matières solides de type aGent de réticulation, les matières solides de type liant étant constituées de 20 à 100 % en pds de liant C et de 0 à 80 % en pds d'un ou plusieurs liant(s) supplémentaire(s) et les matières solides de type agent de réticulation étant constituées de 80 à 100 % en pds d'une ou plusieurs résine(s) aminoplastique(s) et de 0 à 20 % en pds d'un ou plusieurs agent(s) de réticulation supplémentaire(s), la somme des % en pds respectifs étant égale à 100 % en pds et le liant C étant produit par la réaction d'un polyisocyanate A partiellement bloqué par un ou plusieurs monoalcool(s) A2 et ayant une teneur en groupes isocyanates libres de 0,5 à 10 % en pds avec une résine B comprenant un nombre de groupes hydroxyle de 50 à 250 mg de KOH/g et un nombre de groupes carboxyle de 10 à 50 mg de KOH/g à un rapport molaire des groupes hydroxyle de B aux groupes isocyanate libres de A d'au moins 2:1.

2. Compositions de revêtement aqueuses selon la revendication 1, le polyisocyanate A étant un produit d'addition préparé à partir d'un ou plusieurs polyisocyanate(s) A1 et un déficit d'un ou plusieurs monoalcool(s) A2, le un ou plusieurs polyisocyanate(s) A1 étant choisi(s) parmi le groupe constitué de diisocyanates avec des groupes NCO liés à l'atome de carbone non aromatique, d'un triisocyanatononane, des polyisocyanates dérivés des diisocyanates avec des groupes NCO liés au carbone non aromatique et de n'importe quelles combinaisons de ceux-ci.

3. Compositions de revêtement aqueuses selon la revendication 1 ou 2, la teneur en groupes isocyanates bloqués par le monoalcool A2 étant de 0,1 à 0,5 mole pour 100 g de liant C.

4. Compositions de revêtement aqueuses selon la revendication 1, 2 ou 3, la résine B étant un produit d'estérification fabriqué à partir d'une résine de polyuréthane B1 avec un nombre de groupes carboxyle de 50 à 200 mg de KOH/g et d'un polyester polyol B2 ayant un nombre de groupes hydroxyle de 70 à 300 mg de KOH/g et un nombre de groupes carboxyle de 0 à 30 mg de KOH/g.

5. Compositions de revêtement aqueuses selon l'une quelconque des revendications précédentes, dans lesquelles les liants supplémentaires ont une fonctionnalité hydroxyle.

6. Compositions de revêtement aqueuses selon l'une quelconque des revendications précédentes, dans lesquelles la même résine B qui forme un élément structurel du liant C est contenue comme liant supplémentaire ou comme liant supplémentaire unique.

7. Compositions de revêtement aqueuses selon l'une quelconque des revendications précédentes, dans lesquelles les matières solides de type agent de réticulation sont constituées d'une ou plusieurs résine(s) aminoplastique(s).

8. Compositions de revêtement aqueuses selon la revendication 7, dans lesquelles la une ou plusieurs résine(s) aminoplastique(s) est(sont) des résines aminoplastiques.

9. Procédé de production d'une couche de revêtement, comprenant les étapes suivantes :
a) application d'une composition de revêtement aqueuse selon l'une quelconque des revendications précédentes à un substrat,
b) durcissement d'une manière thermique de la couche de revêtement à une température d'objet qui n'est pas suffisante pour cliver, le(s) monoalcool(s) A2 des groupes isocyanate bloqués du liant C.

10. Procédé selon la revendication 9, la composition de revêtement aqueuse étant appliquée et thermiquement durcie pour former une couche de revêtement d'apprêt surfaçant sur un substrat automobile.
